Europäisches Patentamt

**European Patent Office**

Office européen des brevets

(11) Publication number: **0 378 339**
**A2**

(12) # EUROPEAN PATENT APPLICATION

(21) Application number: **90300191.5**

(51) Int. Cl.⁵: **G01S 7/02**

(22) Date of filing: **08.01.90**

(30) Priority: **07.01.89 GB 8900330**

(43) Date of publication of application:
**18.07.90 Bulletin 90/29**

(84) Designated Contracting States:
**DE ES FR GB IT**

(71) Applicant: **BRITISH AEROSPACE PUBLIC LIMITED COMPANY**
**11 Strand**
**London WC2N 5JT(GB)**

(72) Inventor: **Robinson, Nicholas Paul**
**89, Park Avenue**
**Hull North Humberside(GB)**
Inventor: **Naseem, Tarique**
**2, Thermia Avenue**
**Wyke Bradford(GB)**
Inventor: **Watts, Andrew Martin**
**231, National Avenue**
**Hull North Humberside(GB)**

(74) Representative: **Newell, William Joseph et al**
**Wynne-Jones, Lainé & James 22 Rodney Road**
**Cheltenham GL50 1JJ(GB)**

(54) **Aural display apparatus.**

(57) Aural display apparatus comprises a set of stereo headphones supplied with left and right audio signals each modulated in accordance both with the position of a target or virtual object and with the position of the user's head. The characteristics modulated may be the interaural delay, the frequency spectra and/or the differential attenuation.

Fig. 1.

## AURAL DISPLAY APPARATUS

This invention relates to aural display apparatus for assisting a person to localise an object.

The pilot of a modern fighter aircraft is supplied with a multitude of different items of information concerning the operational state of the various systems on board the aircraft, together with electronically-gathered information concerning possible threats to the aircraft and external intelligence information. Most of the information gathered in this way is presented in visual form to the pilot. However, because of the vast amount of information, it is possible that the pilot may ignore or miss an important item of information, particularly when his workload is high. For example, when a missile is approaching the aircraft, the pilot may miss a vital visual warning generated by equipment on board the aircraft because his attention has been directed elsewhere. A need exists, therefore, for a system which can alert the pilot of an aircraft by non-visual means, when a threat is approaching. Ideally, also, such a system would not only alert the pilot of the aircraft to the existence of such a threat but would also indicate to the pilot the direction of attack of the missile so that the pilot could take appropriate evasive action.

According to one aspect of this invention, there is provided aural display apparatus, comprising means for determining the position of a virtual object relative to a user, first and second audio signal channels for presenting audio signals to the user, and means responsive to said position determining means for modulating at least one of the magnitude, phase and frequency content of at least one of said signal channels thereby to identify the location of the virtual object relative to the user.

The phrase "virtual object" is used herein to identify the notional source of the signal as perceived by the user of the localiser.

According to another aspect of this invention, there is provided binaural display apparatus for providing a user with information representing the position of an object relative to the user, said apparatus comprising:
a transducer assembly for being associated in fixed relationship with the head of a user and having left and right transducer elements in sound communication with a respective ear of the user and for receiving respective left and right channel signals;
sound generator means for generating left and right channel signals;
transducer assembly locating means for outputting data representing the position of the transducer assembly;
location means for providing data representing the position of said object;

modulation means for modulating said left and right channel signals in accordance with the data output by said transducer assembly and said location means so that, on movement of the head of a user, the signals supplied by each of said transducer elements are modulated to provide the user with information representing the position of said object.

The invention may be performed in various ways and two embodiments thereof will now be described, reference being made to the accompanying drawings, in which:-

Figure 1 is a schematic diagram of a first embodiment of 3D audio localiser in accordance with the invention,

Figure 2 is a more detailed view of the localiser illustrated in Figure 1,

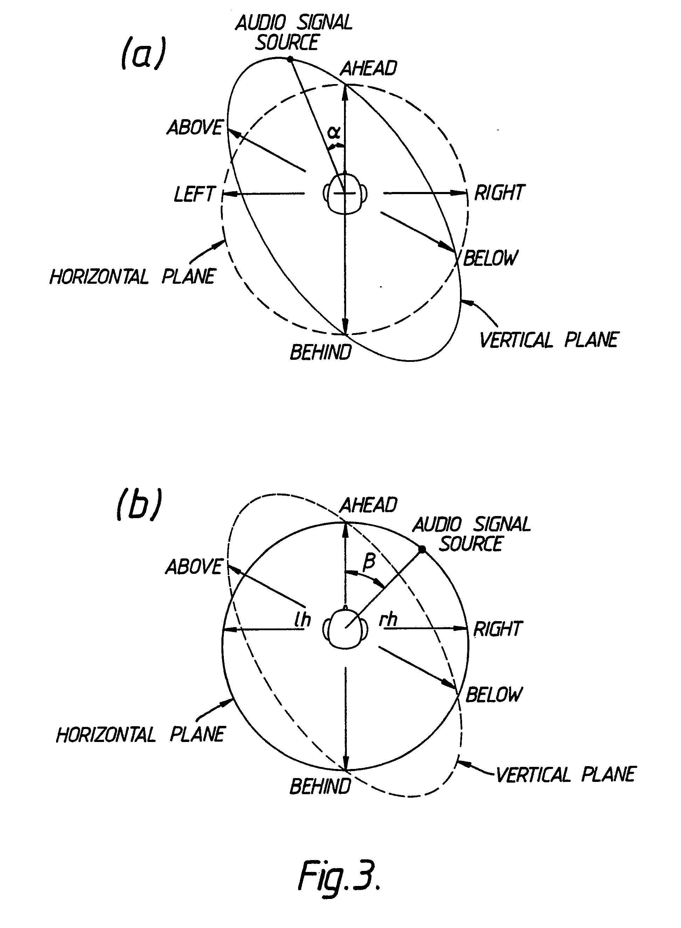

Figures 3a and 3b show perspective views representing the angle of elevation and the azimuth angle respectively of the audio signal source; and

Figure 4 is a basic schematic diagram of a second embodiment of audio localiser in accordance with the invention.

The aural localisers illustrated herein are intended to provide the pilot of an aircraft with an audible signal which represents the direction of arrival of a missile heading towards the aircraft. It will be appreciated that the system described herein may be used in many other applications where it is wished to provide a person with information representing the bearing or direction of an object with respect to a person.

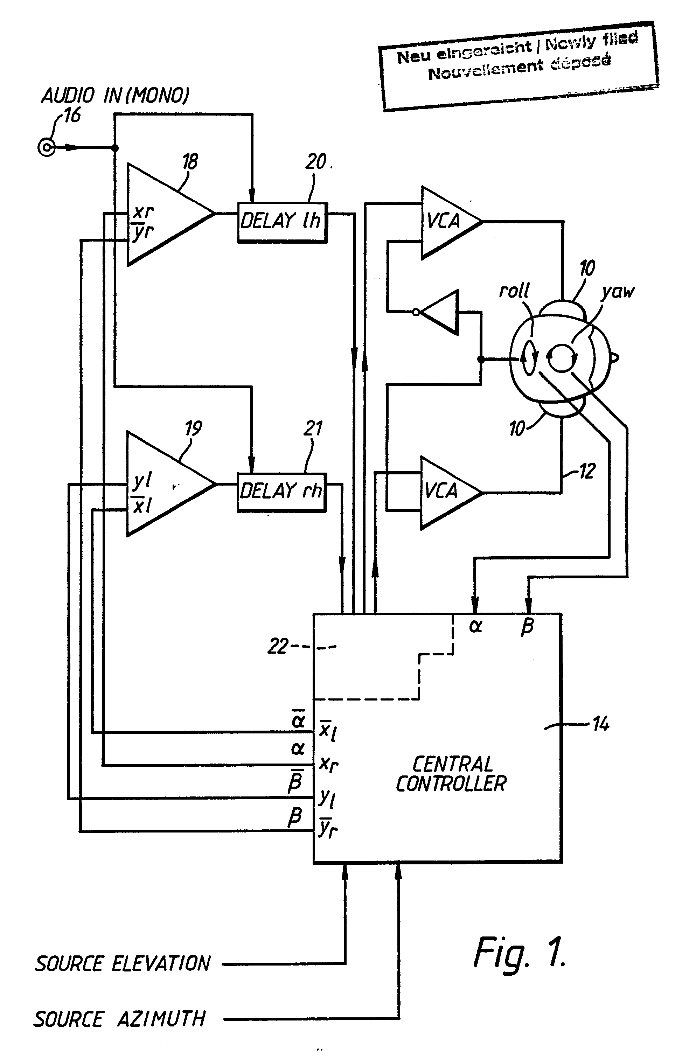

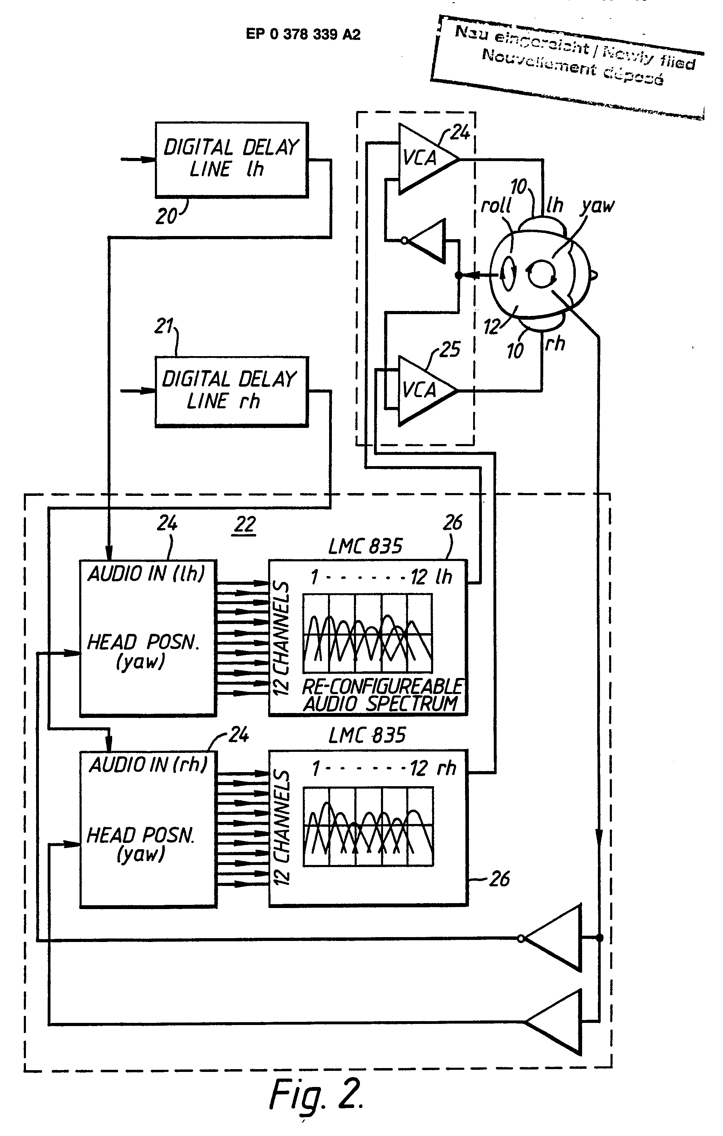

The first embodiment of aural display apparatus is intended to function as a full 3D audio localiser. The localiser integrates phase, amplitude and positional information about a sound source in the yaw and roll axes as perceived by the head and pinnae in free air. Referring to Figures 1 and 2, the apparatus comprises a pair of stereo headphones 10 and an accelerometer package 12 mounted on the headphones which determines the attitude of the user's head in both roll and yaw senses relative to fixed horizontal and vertical reference planes. The package 12 may be mounted elsewhere, for example directly on the head of the user or on a flying helmet etc.

The roll and yaw signals $\alpha$, $\beta$ output from the accelerometer package are supplied to a central controller 14, together with details of the elevation and azimuth angles, relative to the horizontal and vertical reference planes, of the virtual object or audio signal source that is to be displayed aurally to the user. The central controller 14 determines roll and yaw signals, $\alpha$, $\bar{\alpha}, \beta$, $\bar{\beta}$ respectively which represent the position of the virtual object relative to the user's own reference planes, i.e. the horizontal plane containing the pilot's ears and the central vertical plane bisecting his head.

These roll and yaw signals are used to modulate various characteristics of the mono audio signal supplied at 16.

The interaural delay between the left and right signals supplied to the headphones is adjusted by two summing amplifiers 18,19 which add roll and yaw head-induced delays together trigonometrically to correspond to the three-dimensional movements of the head in space. The outputs of the summing amplifiers 18,19 control left- and right-hand delay lines 20 and 21 respectively. The amount of delay is proportional to the amount of head rotation in the plane containing the source location. This latter plane is derived from the vertical and horizontal planes.

If a sound source is located in the horizontal plane (i.e. an elevation $\alpha$, of $0^\circ$ or $180^\circ$) then only head movements in the yaw sense will be summed maximally by the summing amplifiers 18,19 which drive the delay lines 20 and 21 respectively. Conversely, if the sound source is in the vertical plane, then only head movements in the roll axis will be summed maximally by the amplifiers 18 and 19. Most virtual objects will have non-zero values both for elevation and azimuth and these components will be summed trigonometrically to provide delays relative to the "virtual sound plane".

An adjustable filter function or frequency spectrum profile is applied to the signals output from the delay lines 20 and 21 by an adjustable graphic equaliser unit 22 (see Figure 2). The unit 22 has left and right channels. Each channel comprises an equaliser control 24 which contains a look-up table containing boost/cut values for each of the frequency bands of the graphic equaliser 26 for 360 separate sound source location azimuths in one degree steps. The controls 24 receive yaw signals from the accelerometer package 12 , and determine from the look-up tables the appropriate filter function or frequency spectrum to be applied to that channel for that particular yaw angle.

The look up table may be achieved by storing left and right hand memory-mapped stacks in a microcomputer. The values for the tables may be obtained empirically from binaurogramme plots.

In this example each graphic equaliser has 12 channels and is controlled by the control 24. A typical example of equaliser is the LMC 835 digitally controlled graphic equaliser IC available from National Semiconductors. This allows twelve audio frequency spectrum bands to be reprogrammed at up to 1800 times per second.

After leaving the graphic equaliser unit 22, the delayed and filtered left and right-hand signals are supplied to an amplitude weighting unit which including two voltage controlled amplifiers 24,25, applies differential attenuation in response to the roll position of the user's head. This attenuation models the shadowing effects caused by the body below and the head and pinnae above for virtual objects located in the vertical plane. In other words, if the virtual object is below the horizontal, the shoulders will shadow the sound, but if the virtual object is above the vertical plane, the tops of the pinnae will shadow the sound. The alternation may simply consist of filtering the sound above 1kH at Xc dB/Octave where $xc + Cos(\alpha)$, where $\alpha$ is the elevation of the virtual object.

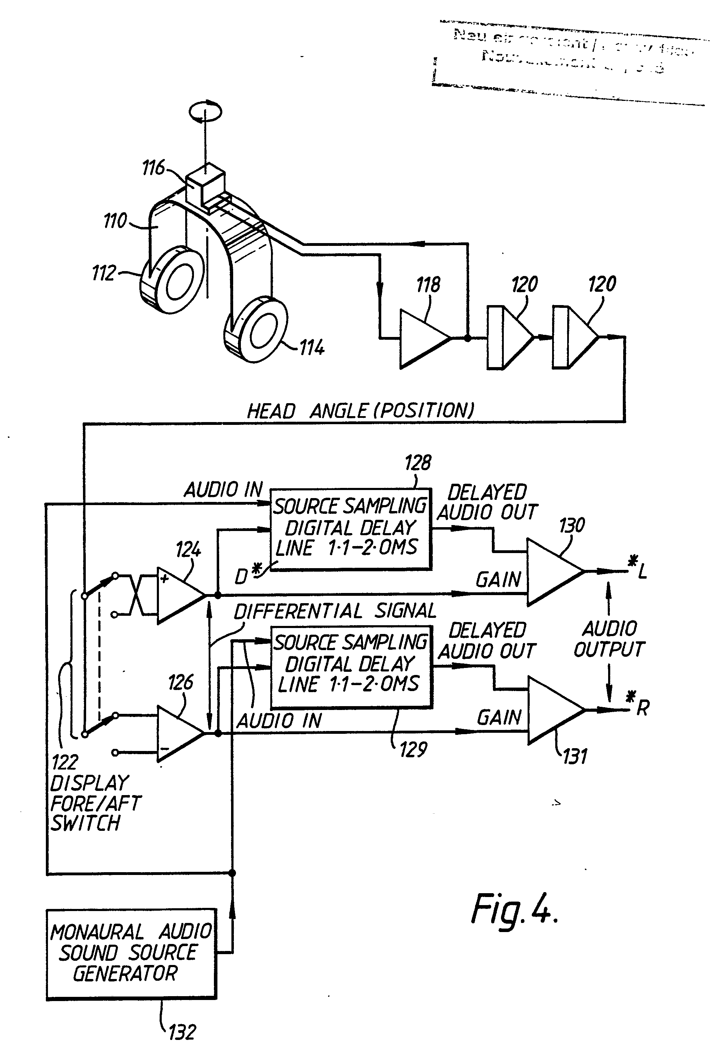

Referring now to Figure 4 the second embodiment of aural localiser comprises a pair of stereo headphones 110 having a left-hand transducer or "can" 112 and a right hand transducer or can 114 supplied with respective left and right channel audio signals as to be described below. An accelerometer package 116 associated with the headphones, or the user's head, acts as a transducer locating means to output a signal representing the position of the headphones 110 relative to the virtual object.

The accelerometer package is shown as outputting a signal representing angular acceleration solely about the vertical axis but, in practice, another accelerometer will output a signal representing angular acceleration about a fore-and-aft axis perpendicular to the vertical axis of the headphones 110.

The outputs about the vertical axis and the fore-and-aft axis are processed in similar ways to apply to the left and right hand channels an interaural delay of magnitude and sense dependent on the output of the accelerometer. The processing of the output of the accelerometer which senses angular acceleration about the vertical axis will be described. This provides a system which places the virtual object in either the front or rear hemisphere so the pilot can tell whether the thread is from the front or from the rear. The output of the fore-and-aft axis accelerometer positions the virtual object in the upper or lower hemisphere so the pilot can tell whether the threat is from above or below.

The output signal from the vertical axis accelerometer is supplied to a servo amp driver 118 the output of which is supplied via a feedback loop to the accelerometer package 116 and also to the first of a pair of integrators 120. The integrators 120 convert the angular acceleration signal into an angular position signal. The position signal is supplied via double pole switch 122 to left-hand and right-hand differential amplifiers 124 and 126 respectively. The switch 122 is arranged so that the position signal is supplied to the inverting terminal of one of the differential amplifiers and to the non-inverting terminal of the other amplifier. The output of each differential amplifier is supplied to a respective digital delay line 128,129 and also to a voltage controlled amplifier 130,131. Each digital delay line 128,129 is a fast-sampling audio delay line working on the principal of a "bucket-brigade" or "round robin stack" digital delay line. The delay line can impose a delay of between 1.1 to 2.0 ms. Each voltage controlled amplifier 130,131 is operable to amplify the delayed audio signal by a gain which is set in accordance with the angular position signals supplied via the associated differential amplifier 124 or 126. The VCA's 130 and 131 contain low pass filters which attenuate the audio signal at 6dB/Octave with variable onsets: when the gain signal is maximum, the onset is at 18kH$_z$. This varies in proportion to the GAIN signal. At minimum, the onset is at 1.0 kH$_z$. The output from the voltage controlled amplifiers 130,131 are supplied to the left and right transducers 112 and 114 respectively.

A monaural audio sound-source generator 132 is connected in parallel to the digital delay lines 128,129. The digital delay lines 128,129 impose a differential delay whose sense is dependent on the setting of the double gang switch 122 and whose magnitude is dependent on the angular position of the headphones 110 relative to the vertical axis. Similarly, the voltage controlled amplifiers 130,131 are controlled by means of the output from the associated differential amplifier 124 or 126 to change the gain of the audio output signals to model "shadowing" effects of the head for sounds approaching the head from obtuse angles (i.e. greater than 45°) from the front position.

In use, when the early warning system of the aircraft detects the approach of a threat in the form of either a missile or a target, the bearing and range of the threat relative to the aircraft are determined by the early warning system. The early warning information could be generated by systems on board the aircraft, for example a radar tracker or it could be obtained by systems external to the aircraft and supplied to the aircraft by a communications link.

The range of the threat is used to control the output amplitude of the sound-source generator 132 so that, as the threat approaches, so the perceived amplitude of the warning sound increases. The data relating to the bearing of the threat is processed to determine whether or not the threat is approaching from the forward hemisphere or from the rearward hemisphere. If the threat is approaching from the forward hemisphere, the double pole switch 122 is kept in the position as shown in the Figure so that, as the pilot turns his head in the clockwise sense, as viewed from above, the delay imposed on the left channel signal by the left-hand digital delay line 128 is reduced and the delay imposed on the right channel signal by the right-hand delay line 129 is increased so as to give to the pilot wearing the headphones the illusion that the sound is coming from in front of him. Conversely, if the early warning system determines that the threat is approaching from the rear hemisphere, the double-gang switch 122 will be switched over so that the angular position data is supplied to the inverting terminal of the differential amplifier 124 and to the non-inverting terminal of the differential amplifier 126. Thus, on clockwise movements of the pilot's head about the vertical axis, the digital delay lines 128,129 will increase the delay imposed on the right channel signal.

As mentioned above, for ease of description, the accelerometer package 116 is illustrated as including only one accelerometer. In practice, two accelerometers will be provided, the second accelerometer being sensitive to angular acceleration about a fore-and-aft axis orthogonal to the vertical axis. The second accelerometer will provide output data which applies differential time delays to the left and right channel signals applied to the left and right headphones in accordance with head movement about the fore-and-aft axis. This part of the system will include a double pole change-over switch similar to switch 122, but which will be switched as appropriate to indicate to the pilot whether the missile is approaching from the upper or the lower hemisphere. The delay calculated by this latter part of the system will be superimposed, i.e. added to, the delays imposed by the part of the system sensitive to rotation about the vertical axis. The components of this part of the system will be of generally the same form as those for the part described above.

In this manner, the system provides to the pilot a quickly assimilable warning of the direction of arrival and the range of an incoming missile.

It will be appreciated that this system operates on the principle of modulating the interaural delay between the signals as supplied to the left and the right-hand ear in accordance with the angular position of the user's head. Information as to whether the missile is approaching from the upper, lower, forward or rearward hemispheres is determined using an early warning system provided in the aircraft and this information used to set the appropriate double gang switches in the system to indicate upper/lower hemisphere and front/rear hemisphere.

## Claims

1. Aural display apparatus, comprising means for determining the position of a virtual object relative to a user, first and second audio signal channels for presenting audio signals to the user, and means responsive to said position determining means for modulating at least one of the magnitude, phase and frequency content of at least one of said signal channels thereby to identify the location of the virtual object relative to the user.

2. Aural display apparatus according to Claim 1, wherein said modulating means includes delay line means for applying an adjustable differential delay between said first and second audio signal channels dependent on the angular position of the user's head relative to the virtual object.

3. Aural display apparatus according to Claim 1 or Claim 2, wherein said monitoring means includes means for applying a differential magnitude weighting to said first and second audio signal channels dependent on the angular position of the user's head relative to the virtual object.

4. Aural display apparatus according to any preceding claim, wherein said monitoring means includes reprogrammable filter means for applying adjustable filter functions to said first and second audio signal channels dependent on the angular position of the user's head relative to the virtual object.

5. Aural display apparatus according to Claim 4, wherein said filter means comprises a multiband digitally controlled graphic equaliser.

6. Aural display apparatus according to Claim 4, wherein said filter means comprises an active notch filter means.

7. Binaural display apparatus for providing a user with information representing the position of an object relative to the user, said apparatus comprising:
a transducer assembly for being associated in fixed relationship with the head of a user and having left and right transducer elements in sound communication with a respective ear of the user and for receiving respective left and right channel signals;
sound generator means for generating left and right channel signals;
transducer assembly locating means for outputting data representing the position of the transducer assembly;
location means for providing data representing the position of said object;
modulation means for modulating said left and right channel signals in accordance with the data output by said transducer assembly and said location means so that, on movement of the head of a user, the signals supplied by each of said transducer elements are modulated to provide the user with information representing the position of said object.

8. Binaural display apparatus according to Claim 1, wherein said transducer assembly comprises a pair of headphones.

9. Binaural display apparatus according to Claim 7 or Claim 8, wherein said transducer assembly means comprises accelerometer means.

10. Binaural display apparatus according to any one of Claims 7 to 9, wherein said modulation means includes an audio delay line means associated with at least one of the left and right signal channels, said audio delay line means being operable to impose a delay between said left and right signal channels of magnitude dependent on the output of said transducer assembly locating means.

11. Binaural display apparatus according to any one of Claims 7 to 10, which includes variable gain amplifier means associated with at least one of said left and right signal channels, the gain of said variable amplifier means being set in response to the output of said transducer assembly locating means.

AUDIO IN (MONO)

Neu eingereicht / Newly filed
Nouvellement déposé

CENTRAL CONTROLLER

SOURCE ELEVATION

SOURCE AZIMUTH

Fig. 1.

EP 0 378 339 A2

Fig. 2.

Fig.3.

Fig.4.